# EUROPEAN PATENT SPECIFICATION

(11) **EP 2 913 261 B1**
(45) Date of publication and mention of the grant of the patent: **11.12.2019**
(21) Application number: 15156743.5
(22) Date of filing: 26.02.2015
(51) Int. Cl.: B62M 6/90, B62J 9/00

(54) **POWER-ASSISTED BICYCLE AND BATTERY CASE**
KRAFTUNTERSTÜTZTES FAHRRAD UND BATTERIEGEHÄUSE
BICYCLETTE À PÉDALAGE ASSISTÉ ET BOÎTIER DE BATTERIE

(30) Priority: 28.02.2014 JP 2014039856
(43) Date of publication of application: 02.09.2015
(73) Proprietor: Yamaha Hatsudoki Kabushiki Kaisha, Iwata-shi, Shizuoka 438-8501 (JP)
(72) Inventor: Arimune, Nobuyasu, Iwata-shi, Shizuoka 438-8501 (JP); Hasumi, Mitsuharu, Iwata-shi, Shizuoka 438-8501 (JP); Itagaki, Takahiro, Iwata-shi, Shizuoka 438-8501 (JP); Kinpara, Yuki, Iwata-shi, Shizuoka 438-8501 (JP)
(74) Representative: Grünecker Patent- und Rechtsanwälte PartG mbB

(56) References cited:
- EP-A2- 0 985 596
- JP-A- H1 159 532
- JP-B2- 3 378 740

## Description

This invention relates to a power-assisted bicycle according to the preamble of independent claim 1 and a battery case for housing a battery according to the preamble of independent claim 8. Such a power-assisted bicycle and such a battery case for housing a battery can be taken from the prior art document EP 0 985 596 A2.

A power-assisted bicycle includes an assist system including an electric motor that assists pedal force which is a force applied by a rider to pedals and a battery that supplies electronic power to the electric motor. JP 2013-32695 A discloses a power-assisted bicycle for rent to a user and a system of a parking station for storing the power-assisted bicycles. In this document, the user may rent a power-assisted bicycle by attaching a battery possessed by the user to the bicycle.

In JP 2002-240765 A, a battery is detachable from a bicycle body. When a user attaches the battery, first, a terminal of the battery and a terminal of the bicycle body are connected to each other and the battery is placed in a proper position. Then, a lock member (a lever in JP 2002-240765 A) provided in the upper portion of a battery case of the bicycle body is secured with a key, and thereby, the battery is locked in the battery case.

The bicycle may start traveling using the assist system without locking of the battery. Especially, in the system of JP 2013-32695 A, attachment work and detachment work of the battery is always required when the user starts to use the bicycle and returns the bicycle, and thus the frequency of attachment works and detachment works of the battery by the user is high. Thus, the possibility that the bicycle starts traveling without locking of the battery is high.

When the bicycle starts traveling without locking of the battery, the electrical connection between the terminal of the battery and the terminal of the battery case may be released due to vibration during traveling, and then the assist system may be turned off. If the lock mechanism in JP 2002-240765 A is applied to the power-assisted bicycle of JP 2013-32695 A, cumbersome attachment and detachment work of the battery (that is, works with the key) is required at each time when the user starts to use and returns the bicycle. Accordingly such a lock mechanism which uses the key is not preferable for the user.

An object of the invention is to provide a power-assisted bicycle and a battery case that can prevent interruption of electronic power supply from a battery to an electric motor during traveling of a bicycle without requiring cumbersome work of a user.

According to the present invention said object is solved by a power-assisted bicycle having the features of independent claim 1. Preferred embodiments are laid down in the dependent claims. Moreover, said object is also solved by a battery case having the features of independent claim 8.

Accordingly, a power-assisted bicycle includes an electric motor that drives in response to pedal force applied by a rider to pedals, a battery detachable from a bicycle body for supplying power to the electric motor, a terminal provided in the battery, a terminal provided in the bicycle body, a lock mechanism for locking the battery in a state in which the terminal of the bicycle body and the terminal of the battery are in contact with each other when the battery is mounted on the bicycle body, and a separation mechanism that automatically separates the terminal of the bicycle body and the terminal of the battery when the lock mechanism is released.

Further, a battery case of a vehicle including an electric motor that drives by electronic power from a battery. The battery case includes a terminal for coming into contact with a terminal of the battery, a lock mechanism for locking the battery so that the contact between the terminal of the battery and the terminal of the battery case may be maintained when the battery is placed in the battery case, and a separation mechanism that automatically separates the terminal of the battery and the terminal of the battery case when the lock mechanism is released.

The terminal of the bicycle body and the terminal of the battery are separated from each other when the lock mechanism is released. Thus, it is prevented that the electronic power supply from the battery to the electric motor is interrupted during traveling of the vehicle though the electronic power has been supplied from the battery to the electric motor at the start of traveling.

In an embodiment, a battery case in which the battery can be inserted in a first direction is provided to the bicycle, and the lock mechanism may include a lock member movable relative to the battery, the lock member being movable between a first position in which the lock member restricts a movement of the battery in a second direction which is a direction opposite to the first direction and a second position in which the lock member allows the movement of the battery, and the terminal of the bicycle body may be provided in the lock member. The terminal of the bicycle body is provided in the lock member as described above, and thereby, the structure of the separation mechanism may be simplified.

In an embodiment, the terminal of the bicycle body may be in contact with the terminal of the battery when the lock member is in the first position, the terminal of the bicycle body may be away from the terminal of the battery when the lock member is in the second position, and the separation mechanism may move the lock member relative to the battery from the first position to the second position when the lock member is released. According to the configuration, it is prevented that the electronic power supply from the battery to the electric motor is interrupted during traveling of the vehicle though the electronic power has been supplied from the battery to the electric motor at the start of traveling.

In an embodiment, the lock member may be movable in a third direction which is a direction intersecting with the first direction between the first position and the second position, and the lock member in the first position may engage with the battery. According to the embodiment, a member covering the battery is not required to lock the battery, and thus the size of the case housing the battery can be made smaller.

In an embodiment, the lock member may be a cover for opening and closing the battery case. According to the configuration, the battery may be protected by the cover.

In an embodiment, the separation mechanism may urge the lock member toward the second position. According to the configuration, the separation mechanism may be realized relatively easily.

In an embodiment, the separation mechanism may include an elastic member that applies a force of separating the terminal of the bicycle body and the terminal of the battery. According to the configuration, the separation mechanism may be realized relatively easily.

### BRIEF DESCRIPTION OF THE DRAWINGS

Fig. 1 shows a power-assisted bicycle according to an embodiment.
Fig. 2 is a partial sectional view of a battery case of the power-assisted bicycle. In the drawing, a lock cover of the battery case is placed in an opened position.
Fig. 3 is a partial sectional view of the battery case shown in Fig. 2. In the drawing, the lock cover of the battery case is placed in a closed position.
Fig. 4 shows a separation mechanism of the battery case in Figs. 2 and 3.
Fig. 5 is a partial sectional view of another example of the battery case of the power-assisted bicycle. In the drawing, a lock member of the battery case is placed in an unlocked position.
Fig. 6 is a partial sectional view of the battery case shown in Fig. 5. In the drawing, the lock member of the battery case is placed in a locked position.
Fig. 7 is an enlarged view of a part shown by VII in Fig. 6.

### DETAILED DESCRIPTION OF THE EMBODIMENTS

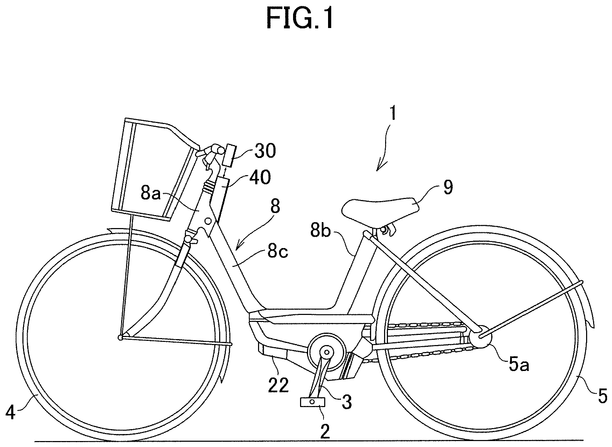

As below, a preferred embodiment will be explained with reference to the drawings. Fig. 1 shows a power-assisted bicycle 1 according to the preferred embodiment.

The power-assisted bicycle 1 includes pedals 2 and a pedal cranks 3 that rotates when a rider presses the pedals 2. Further, the power-assisted bicycle 1 includes an electric motor 22 for assisting pedal force applied by the rider to the pedals 2. In a power transmission path from the pedal cranks 3 to a rear wheel 5, the torque of the electric motor 22 is added to the torque from the pedal cranks 3. Then, the resultant torque is transmitted to the rear wheels. In the example of Fig. 1, the electric motor 22 is located under a saddle post 8b supporting a saddle 9. The position of the electric motor 22 is not limited to that, but may be appropriately changed. For example, the electric motor 22 may be located in a hub 5a of the rear wheel 5.

The power-assisted bicycle 1 includes a battery 30 for supplying drive electronic power to the electric motor 22, and a battery case 40 from which the battery 30 is detachable. The battery case 40 is supported by a body frame 8 of the bicycle. In an example, as shown in Fig. 1, the battery case 40 is attached to a head pipe 8a supporting a handle stem. The attachment position of the battery case 40 is not limited to the head pipe 8a. For example, the battery case 40 may be attached to the saddle post 8b or a tube 8c extending rearward and downward from the head pipe 8a.

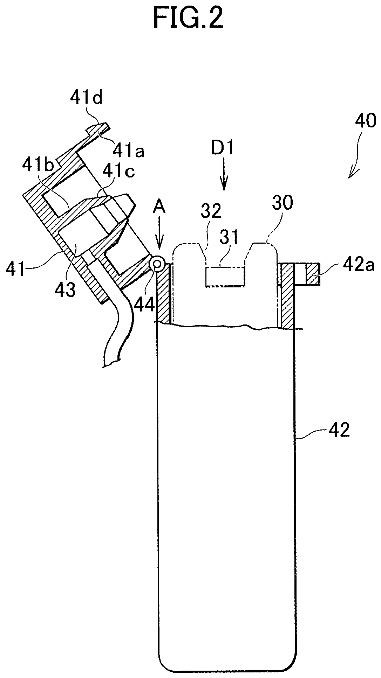

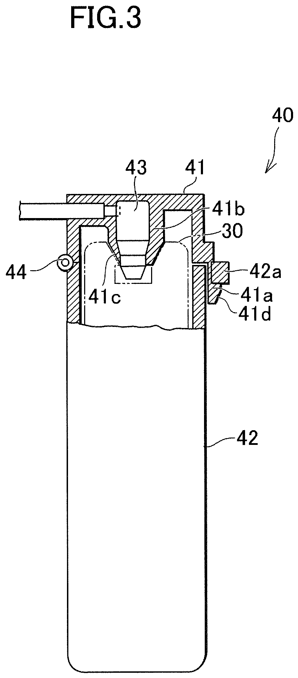

Figs. 2 and 3 are partial sectional views showing an example of the battery case 40. Fig. 2 shows a state in which a lock cover 41, which will be described later, is placed in an opened position (unlocked position). Fig. 3 shows a state in which the lock cover 41 is placed in a closed position (locked position).

The battery case 40 includes a case main body 42. For example, the case main body 42 is formed to open upwardly so that the battery 30 is inserted into the case main body 42 from the upside. The opening direction of the case main body 42 is not limited to that. The opening direction of the case main body 42 may be tilted rearward or forward. Alternatively, the case main body 42 may open toward a side.

The battery case 40 includes the lock cover 41 for opening and closing the case main body 42. The lock cover 41 is supported to be openable and closable by a hinge portion 44 provided on the edge of the case main body 42. The lock cover 41 in the closed position restricts the upward movement of the battery 30. That is, the lock cover 41 in the closed position restricts the movement of the battery 30 in the opposite direction to the insertion direction (in Fig. 2, the insertion direction is shown by a D1 direction). When the lock cover 41 is in the opened position, the movement of the battery 30 in the opposite direction to the insertion direction is allowed. The lock cover 41 corresponds to "lock member" in claims.

A terminal 31 is provided in the battery 30 (hereinafter, the terminal 31 is referred to as "battery terminal"). In the example shown in Fig. 2, the battery 30 includes the battery terminal 31 on its upper end. The battery case 40 includes a terminal 43 for electrical connection to the battery terminal 31 (hereinafter, the terminal 43 is referred to as "case terminal"). In the example in Figs. 2 and 3, the case terminal 43 is provided in the lock cover 41.

A lock mechanism for locking the battery 30 is provided in the battery case 40. The lock mechanism locks the battery 30 in a state in which the case terminal 43 and the battery terminal 31 are in contact with each other when the battery 30 is mounted on the bicycle body (that is, when the battery 30 is placed in the case main body 42). That is, the lock mechanism is a mechanism of holding the battery 30 in the battery case 40 not to release the contact between the case terminal 43 and the battery terminal 31.

In the battery case 40 shown in Figs. 2 and 3, the above described lock cover 41 and an engaging portion 41a formed on the lock cover 41 and an engaged portion 42a formed on the case main body 42 are provided as the lock mechanism. The engaging portion 41a is engaged (caught) in the engaged portion 42a when the lock cover 41 is in the closed position (see Fig. 3), and thereby, the movement of the lock cover 41 from the closed position to the opened position is restricted. One of the engaging portion 41a and the engaged portion 42a may be formed to be elastically deformable. When the engaging portion 41a is engaged with the engaged portion 42a, the rider elastically deforms the one portion of the engaging portion 41a and the engaged portion 42a to thereby release the engagement between them. For example, as shown in Fig. 2, an elastically deformable hook is formed as the engaging portion 41a on the lock cover 41. A slope 41d is formed in the hook. Utilizing the slope, the engaging portion 41a may move through the engaged portion 42a to the position where the engaging portion 41a is engaged with the engaged portion 42a (the position shown in Fig. 3). As a result, the rider may easily move the lock cover 41 from the opened position to the closed position. In the following explanation, the state in which the engaging portion 41a is engaged in the engaged portion 42a is referred to as "lock state". The state in which the engagement between the engaging portion 41a and the engaged portion 42a is released is referred to as "release state".

A separation mechanism that separates the case terminal 43 and the battery terminal 31 is provided in the battery case 40. The separation mechanism separates the case terminal 43 and the battery terminal 31 when the lock mechanism is in the released state, and then releases the electrical connection between the two terminals. According to the separation mechanism, electronic power supply from the battery 30 to the electric motor 22 in a situation where the lock mechanism set in the lock state may be prevented.

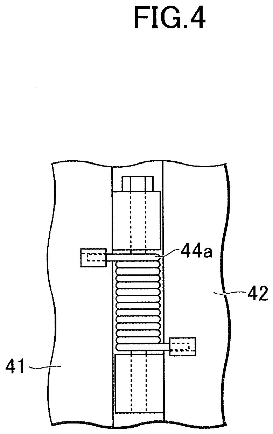

For example, an elastic member provided in the hinge portion 44 may be used as the separation mechanism. Fig. 4 is a drawing obtained when the hinge portion 44 is seen in an A direction in Fig. 2. In the drawing, a spring 44a forming the separation mechanism is shown. One end of the spring 44a is fixed to the battery case 40 and the other end of the spring 44a is fixed to the case main body 42. The spring 44a (separation mechanism) urges the lock cover 41 toward the opened position.

The case terminal 43 is provided on the lock cover 41. The case terminal 43 is in contact with the battery terminal 31 when the lock cover 41 is in the closed position (see Fig. 3). The case terminal 43 is configured so that the case terminal 43 is away from the battery terminal 31 when the lock cover is in the opened position (see Fig. 2). The spring 44a moves the lock cover 41 from the closed position to the opened position when the lock mechanism is released (that is, when (the engagement between the engaging portion 41a and the engaged portion 42a is released). That is, when the lock mechanism is released, the case terminal 43 separates from the battery terminal 31. The lock mechanism holds the lock cover 41 in the closed position against the elastic force of the separation mechanism and locks the battery 30.

The elastic force of the spring 44a is designed so that the case terminal 43 and the battery terminal 31 automatically separate from each other when the lock mechanism is released. That is, the elastic force of the spring 44a is designed so that the case terminal 43 and the battery terminal 31 separate from each other without an external force other than the elastic force of the spring 44a (for example, without user's operation to move the lock cover 41 to the open position) when the lock mechanism is released. For example, in a structure where a fitting force (friction force) acts between the case terminal 43 and the battery terminal 31, the elastic force of the spring 44a is designed so that the case terminal 43 and the battery terminal 31 separate from each other against the force acting between the case terminal 43 and the battery terminal 31. In the example of Fig.2 and 3, the gravity force of the lock cover 41 acts so that the case terminal 43 becomes closer to the battery terminal 31 because the lock cover 41 in the closed position is placed on the upper side of the battery 30. In that structure, the elastic force of the spring 44a may be designed so that the elastic force moves the lock cover 41 to the open position against the gravity force of the lock cover 41.

As described above, the case terminal 43 is provided in the openable and closable lock cover 41. Accordingly, for example, compared to the case where the case terminal 43 is provided in the case main body 42, the separation mechanism can be realized in a relatively simple structure.

Note that the separation mechanism is not limited to the spring 44a. For example, the terminal of the battery 30 may be provided on the lower surface of the battery 30 and the case terminal 43 and a spring (an elastic member) as the separation mechanism may be provided in the bottom of the case main body 42. In this case, when the lock mechanism is in the release state, the spring may automatically lift the battery 30 against the weight of the battery 30 to separate the case terminal 43 and the battery terminal 31. That is, the elastic force of the spring may be designed to lift the battery 30 against the weight of the battery 30 to separate the case terminal 43 and the battery terminal 31.

Further, a spring (an elastic member) as the separation mechanism may be provided in the bottom of the case main body 42 and the case terminal 43 may be provided in the lock cover 41. In this case, the spring pushes the battery 30 upward and the lock cover 41 is pushed up by the battery to be placed from the closed position to the opened position.

In an example of the battery case 40, a projecting portion is formed in one of the lock cover 41 and the battery 30 and a recessed portion in which the projecting portion is fitted is formed in the other. In the example in Figs. 2 and 3, a projecting portion 41b is formed in the lock cover 41 and a recessed portion 32 is formed in the battery 30. When the lock cover 41 is in the closed position, the projecting portion 41b is fitted in the recessed portion 32. Thereby, the position of the battery 30 within the battery case 40 is fixed. The projecting portion 41b is thinner toward its end and the projecting portion 41b has a slope 41c on its outer surface. On the other hand, the inner surface of the recessed portion 32 of the battery 30 is inclined according to the slope 41c. In an example, the slope 41c is formed to be in contact with the inner surface of the recessed portion when the lock cover 41 is in the closed position. Thereby, the position of the battery 30 is fixed by the lock cover 41.

Further, in an example of the battery case 40, as shown in Fig. 4, the case terminal 43 is provided on the projecting portion 41b and the battery terminal 31 is provided inside of the recessed portion 32. The case terminal 43 further projects from the end of the projecting portion 41b. The battery terminal 31 is formed in e.g., a concave shape so that the case terminal 43 may be inserted into the battery terminal 31. According to the arrangement of the terminals 43, 31, their positions are appropriately determined by the projecting portion 41b and the recessed portion 32, and thereby, unnecessary force can be prevented from acting on the terminals 43, 31. Note that the shape of the battery terminal 31 and the shape of the case terminal 43 are not limited to the above. For example, the battery terminal 31 may have a pin shape and the case terminal 43 may have a concave shape that receives it.

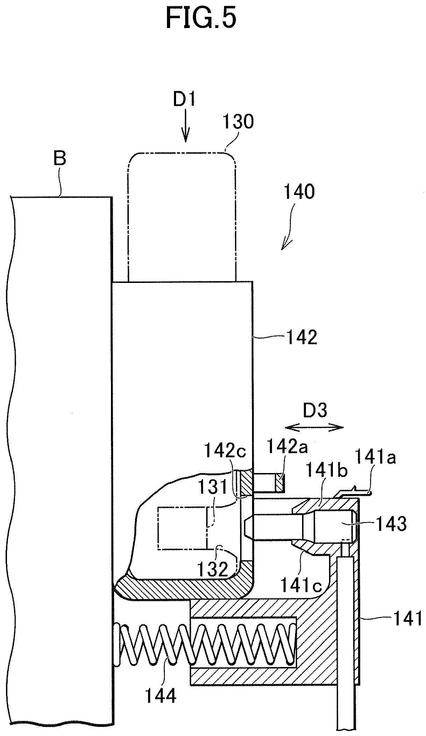

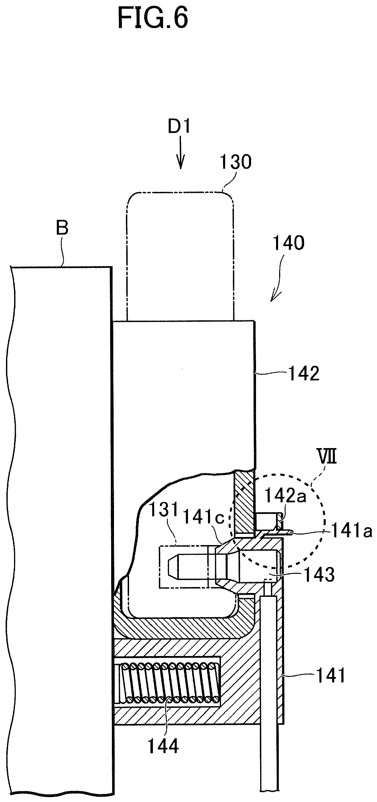

Figs. 5 and 6 show a modified example of the battery case. In these drawings, a battery case 140 is shown as the modified example.

The battery case 140 includes a case main body 142 and a lock member 141. A case terminal 143 is provided in the lock member 141. A battery terminal 131 is provided in a battery 130. The case terminal 143 is provided in the lock member 141, and thereby, a separation mechanism, which will be described later, may be realized in a relatively simple structure.

The lock member 141 is movable relative to the battery 130 in a direction intersecting with the insertion direction of the battery 130. In the example in Figs. 5 and 6, the lock member 141 is relatively movable between a locked position (Fig. 6) and an unlocked position (Fig. 5) in a direction (D3 direction) orthogonal to the insertion direction (D1 direction) of the battery 130. In the example explained here, the case main body 142 is attached on an attachment member B such as a bicycle body frame and the lock member 141 is configured to move. The lock member 141 in the locked position engages with the battery 130 and restricts the movement of the battery 130 in the opposite direction to the insertion direction. When the lock member 141 is in the unlocked position, the engagement between the battery 130 and the lock member 141 is released and the movement of the battery 130 in the opposite direction to the insertion direction is allowed.

The lock member 141 may be attached to the outer surface of the case main body 142 so as to move between the locked position and the unlocked position. In this case, a guide for guiding the movement of the lock member 141 may be formed on the outer surface of the case main body 142. Further, it is not necessary that the lock member 141 moves in parallel to the direction orthogonal to the insertion direction of the battery 130. For example, the lock member 141 may be rotatably supported by a shaft and may move between the locked position and the unlocked position around the shaft.

As shown in Fig. 5, the lock member 141 of the example explained here has a projecting portion 141b projecting toward the case main body 142. An opening 142c is formed in the lower portion of the case main body 142. The battery 130 includes a recessed portion 132 in a position corresponding to the opening 142c. When the lock member 141 is in the locked position, the projecting portion 141b is fitted in the recessed portion 132. As a result, the movement of the battery 130 in the opposite direction to the insertion direction is restricted (see Fig. 6).

When the lock member 141 is in the locked position, the case terminal 143 connects to the battery terminal 131. On the other hand, when the lock member 141 is in the unlocked position, the case terminal 143 separates from the battery terminal 131. In the example explained here, the case terminal 143 is provided on the projecting portion 141b and projects from the end of the projecting portion 141b. The battery terminal 131 is provided inside of the recessed portion 132. The position of the case terminal 143 and the position of the battery 130 are not necessarily limited to those. That is, the case terminal 143 may be provided in a position different from that of the projecting portion 141b in the lock member 141. Further, the battery terminal 131 may be provided in a position different from that of the recessed portion 132 in the battery 130.

A lock mechanism for locking the battery 130 is also provided in the battery case 140. The lock mechanism locks the battery 130 in a state in which the case terminal 143 and the battery terminal 131 are in contact with each other. In the example explained here, the lock mechanism includes the lock member 141, an engaging portion 141a formed on the lock member 141, and an engaged portion 142a formed on the case main body 142. When the lock member 141 is in the locked position, the engaging portion 141a is engaged (caught) in the engaged portion 142a to restrict the movement of the lock member 141 from the locked position to the unlocked position (see Fig. 6).

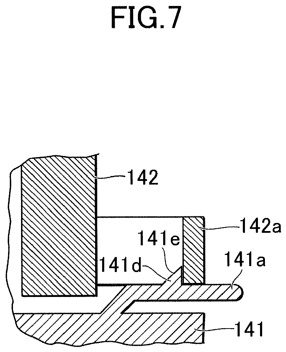

Fig. 7 is an enlarged view of the engaging portion 141a and the engaged portion 142a. In the example shown in the drawing, the engaging portion 141a is formed in an elastically deformable beam shape with one end fixed to the lock member 141 and the other end as a free end. A pawl 141d is formed in the engaging portion 141a. The pawl 141d abuts against the engaged portion 142a, and thereby, the movement of the lock member 141 from the locked position to the unlocked position is restricted. The engaging portion 141a is elastically deformed such that the engagement between the engaging portion 141a and the engaged portion 142a is released. Note that, a slope 141e is formed in the pawl 141d. According to the slope 141e, the user may easily move the lock member 141 from the unlocked position to the locked position.

The battery case 140 is provided with a separation mechanism for separating the case terminal 143 and the battery terminal 131 when the lock mechanism (the engagement between the engaging portion 141a and the engaged portion 142a) is released. The separation mechanism moves the lock member 141 from the locked position to the unlocked position when the lock mechanism is released.

In the example shown in Figs. 5 and 6, the separation mechanism includes a spring 144. The spring 144 urges the lock member 141 toward the unlocked position. The elastic force of the spring 144 is designed so that the lock member 141 automatically move to the unlocked position when the lock mechanism is released. That is, the elastic force of the spring 144 is designed so that the lock member 141 moves to the unlocked position from the locked position without an external force other than the elastic force of the spring 144 (for example, without user's operation to move the lock member 141 to the unlock position) when the lock mechanism is released. For example, when a fitting force (friction force) acts between the case terminal 143 and the battery terminal 131, the elastic force of the spring 144 is designed so that the case terminal 143 and the battery terminal 131 may separate from each other against the force between them. when a friction force acts between the lock member 141 and the case main body 142, the elastic force of the spring 144 is designed so that the case terminal 143 and the battery terminal 131 may separate from each other against the force between the lock member 141 and the case main body 142. The lock mechanism places the lock member 141 in the locked position against the elastic force of the spring 144 and locks the battery 130. For example, as shown in Fig. 5, one end of the spring 144 is attached to an attachment member B (the attachment member B is e.g., the body frame 8) of the case main body 142. The other end of the spring 144 is attached to the lock member 141. In the example in Figs. 5 and 6, the spring 144 is located below the case main body 142. However, the position of the spring 144 is not limited to that, but may be appropriately changed.

The projecting portion 141b of the lock member 141 and the recessed portion 132 of the battery 130 may be configured to fix the position of the battery 130 by the projecting portion 141b like the projecting portion 41b and the recessed portion 32 shown in Fig. 2. That is, a slope 141c of the projecting portion 141b may be formed to be in contact with the inner surface of the recessed portion 132 when the lock member 141 is in the closed position. Thereby, their positions are appropriately fixed by the projecting portion 141b and recessed portion 132, and thus unnecessary force acting on the terminals 143, 131 may be prevented. Note that the shape of the battery terminal 131 and the shape of the case terminal 143 are not limited to those.

As described above, the battery cases 40, 140 have the lock mechanisms and the separation mechanisms. The lock mechanisms lock the batteries 30, 130 in states in which the case terminals 43, 143 and the battery terminals 31, 131 are in contact with each other when the batteries 30, 130 are mounted on the bicycle body. The separation mechanisms separate the case terminals 43, 143 and the battery terminals 31, 131 when the lock mechanisms are released. Thereby, interruption of electronic power supply from the battery to the electric motor during traveling of the vehicle may be prevented.

The present teaching is not limited to the battery cases 40, 140 explained as above, but various changes may be made.

For example, in the above explanation, the engaging portion 41a as the hook is used as the structure for holding the lock cover 41 in the closed position (locked position). Further, the engaging portion 141a having the pawl 141d is used as the structure for holding the lock member 141 in the locked position. However, the structures for holding the lock cover 41 and the lock member 141 in the locked positions may be appropriately changed.

Further, in the above explanation, the separation mechanisms employs the springs. However, the separation mechanisms are not limited to those. For example, the separation mechanism may be adapted so that the separation of the case terminal and the battery terminal by the separation mechanism may be linked to the release of the lock mechanism without the spring.

Furthermore, in the above, the example in which the lock member 141 moves is explained. However, for example, the lock member 141 may be fixed to the body frame of the bicycle or the like and the case main body 142 housing the battery 130 may move. In this case, the relative positional relationship between the lock member and the battery can change in the direction intersecting with the insertion direction of the battery 130. And, the separation (movement in the opposite direction to the insertion direction) can be prevented by the lock member.

In addition, it is not necessary that the lock cover 41 covers the entire upper surface of the battery 30. For example, when an indicator is provided in the battery 30, an opening may be formed in the lock cover 41 so that the indicator is exposed.

## Claims

1. A power-assisted bicycle comprising:
an electric motor (22) for assisting pedal force applied by a rider to pedals (2);
a battery (30, 130) for supplying power to the electric motor (22), said battery (30, 130) detachable mounted on bicycle body;
a terminal (31, 131) provided in the battery (30, 130);
a terminal (43, 143) provided in the bicycle body; and
a lock mechanism (41, 41a, 42a, 141, 141a, 142a) for locking the battery (30, 130) in a state in which the terminal (43, 143) of the bicycle body and the terminal (31, 131) of the battery (30, 130) are in contact with each other when the battery (30, 130) is mounted on the bicycle body; **characterized by**
a separation mechanism (44a, 144) configured to automatically separate the terminal (43, 143) of the bicycle body and the terminal (31, 131) of the battery (30, 130) when the lock mechanism (41, 41a, 42a, 141, 141a, 142a) is released.

2. A power-assisted bicycle according to claim 1, **characterized by** a battery (30, 130) case (40, 140) in which the battery (30, 130) can be inserted in a first direction, wherein the lock mechanism (41, 41a, 42a, 141, 141a, 142a) includes a lock member (41, 141) movable relative to the battery (30, 130), the lock member (41, 141) being movable between a first position in which the lock member (41, 141) restricts a movement of the battery (30, 130) in a second direction which is a direction opposite to the first direction and a second position in which the lock member (41, 141) is configured to allow the movement of the battery (30, 130), and
the terminal (43, 143) of the bicycle body is provided in the lock member (41, 141).

3. A power-assisted bicycle according to claim 2, **characterized by** the terminal (43, 143) of the bicycle body is configured to be in contact with the terminal (31, 131) of the battery (30, 130) when the lock member (41, 141) is in the first position,
the terminal (43, 143) of the bicycle body is configured to be away from the terminal of the battery (30, 130) when the lock member (41, 141) is in the second position, and the separation mechanism (44a, 144) is configured to move the lock member (41, 141) relative to the battery (30, 130) from the first position to the second position when the lock member (41, 141) is released.

4. A power-assisted bicycle according to claim 2 or 3, **characterized in that** the lock member (141) is movable relative to the battery (130) in a third direction which is a direction intersecting with the first direction between the first position and the second position, and
the lock member (141) is configured to engage with the battery (130) when the lock member (141) is in the first position.

5. A power-assisted bicycle according to claim 2 or 3, **characterized in that** the lock member is a cover (41) for opening and closing the battery case (40).

6. A power-assisted bicycle according to any one of claims 2 to 5, **characterized in that** the separation mechanism (44a, 144) is configured to urge the lock member (41, 141) toward the second position.

7. A power-assisted bicycle according to any one of claims 1 to 5, **characterized in that** the separation mechanism includes an elastic member (44a, 144) configured to apply a force of separating the terminal (43, 143) of the bicycle body and the terminal (31, 131) of the battery (30, 130).

8. A battery case (40, 140) for a vehicle including an electric motor (22) for assisting pedal force applied by a rider to pedals (2) by electronic power from a battery(30, 130), comprising:
a terminal (43, 143) configured to come into contact with a terminal (31, 131) of the battery (30, 130); and
a lock mechanism (41, 41a, 42a, 141, 141a, 142a) for locking the battery (30, 130) so that the contact between the terminal (31, 131) of the battery (30, 130) and the terminal (43, 143) of the battery case (40, 140) is maintained when the battery (30, 130) is placed in the battery case (40, 140); **characterized by**
a separation mechanism (44a, 144) configured to automatically separate the terminal (31, 131) of the battery (30, 130) and the terminal (43, 143) of the battery case (40, 140) when the lock mechanism (41, 41a, 42a, 141, 141a, 142a) is released.

## Patentansprüche

1. Ein leistungs-unterstütztes Fahrrad, das umfasst:
einen Elektro-Motor (22), zum Unterstützen von Pedal-Kraft, aufgebracht durch einen Fahrer auf Pedale (2);
eine Batterie (30, 130), zum Zuführen von Leistung zu dem Elektro-Motor (22), diese Batterie (30, 130) ist entfernbar an einem Fahrrad-Körper montiert;
einen Anschluss (31, 131), vorgesehen in der Batterie (30, 130);
einen Anschluss (43, 143), vorgesehen in dem Fahrrad-Körper; und
einen Verriegelungs-Mechanismus (41, 41a, 42a, 141, 141a, 142a), zum Verriegeln der Batterie (30, 130) in einem Zustand, in dem der Anschluss (43, 143) an dem Fahrrad-Körper und der Anschluss (31, 131) von der Batterie (30, 130) in Kontakt miteinander sind, wenn die Batterie (30, 130) an dem Fahrrad-Körper montiert ist,
**gekennzeichnet durch**
einen Trenn-Mechanismus (44a, 144), konfiguriert, um automatisch den Anschluss (43, 143) von dem Fahrrad-Körper und den Anschluss (31, 131) von der Batterie (30, 130) zu trennen, wenn der Verriegelungs-Mechanismus (41, 41a, 42a, 141, 141a, 142a) gelöst ist.

2. Ein leistungs-unterstütztes Fahrrad gemäß Anspruch 1, **gekennzeichnet durch** ein Batterie-(30, 130)-Gehäuse (40, 140), in dem die Batterie (30, 130) in eine erste Richtung eingesetzt werden kann,
wobei der Verriegelungs-Mechanismus (41, 41a, 42a, 141, 141a, 142a) ein Verriegelungs-Element (41, 141) beinhaltet, das relativ zu der Batterie (30, 130) bewegbar ist, das Verriegelungs-Element (41, 141) ist bewegbar zwischen einer ersten Position, in der das Verriegelungs-Element (41, 141) eine Bewegung der Batterie (30, 130) in eine zweite Richtung, die eine Richtung entgegen zu der ersten Richtung ist, beschränkt, und eine zweite Position, in der das Verriegelungs-Element (41, 141) konfiguriert ist, um die Bewegung der Batterie (30, 130) zu gestatten, und der Anschluss (43, 143) von dem Fahrrad-Körper ist in dem Verriegelungs-Element (41, 141) vorgesehen.

3. Ein leistungs-unterstütztes Fahrrad gemäß zu Anspruch 2, **gekennzeichnet durch** den Anschluss (43, 143) von dem Fahrrad-Körper, konfiguriert, um in Kontakt mit dem Anschluss (31, 131) von der Batterie (30, 130) zu sein, wenn das Verriegelungs-Element (41, 141) in der ersten Position ist,
der Anschluss (43, 143) von dem Fahrrad-Körper ist konfiguriert, um entfernt von dem Anschluss von der Batterie (30, 130) zu sein, wenn das Verriegelungs-Element (41, 141) in der zweiten Position ist, und
der Trenn-Mechanismus (44a, 144) ist konfiguriert, um das Verriegelungs-Element (41, 141) relativ zu der Batterie (30, 130) von der ersten Position zu der zweiten Position zu bewegen, wenn das Verriegelungs-Element (41, 141) gelöst ist.

4. Ein leistungs-unterstütztes Fahrrad gemäß zu Anspruch 2 oder 3, **dadurch gekennzeichnet, dass** das Verriegelungs-Element (141) relativ zu der Batterie (130) in eine dritte Richtung, die eine Richtung ist, die sich mit der ersten Richtung zwischen der ersten Position und der zweiten Position schneidet, bewegbar ist, und das Verriegelungs-Element (141) konfiguriert ist, um mit der Batterie (130) einzugreifen, wenn das Verriegelungs-Element (141) in der ersten Position ist.

5. Ein leistungs-unterstütztes Fahrrad gemäß zu Anspruch 2 oder 3, **dadurch gekennzeichnet, dass** das Verriegelungs-Element eine Abdeckung (41) zum Öffnen und Schließen des Batterie-Gehäuses (40) ist.

6. Ein leistungs-unterstütztes Fahrrad gemäß zu irgendeinem der Ansprüche 2 bis 5, **dadurch gekennzeichnet, dass** der Trenn-Mechanismus (44a, 144) konfiguriert ist, um das Verriegelungs-Element (41, 141) in die zweite Position zu drücken.

7. Ein leistungs-unterstütztes Fahrrad gemäß zu irgendeinem der Ansprüche 1 bis 5, **dadurch gekennzeichnet, dass** der Trenn-Mechanismus ein Elastik-Element (44a, 144) beinhaltet, das konfiguriert ist, um eine Kraft der Trennung des Anschlusses (43, 143) von dem Fahrrad-Körper und des Anschlusses (31, 131) von der Batterie (30, 130) aufzubringen.

8. Ein Batterie-Gehäuse (40, 140) für ein Fahrzeug, das ein Elektro-Motor (22) zum Unterstützen von Pedal-Kraft, aufgebracht durch einen Fahrer auf Pedale (2), durch elektrische Leistung von einer Batterie (30, 130), zu unterstützen, das umfasst:
einen Anschluss (43, 143), der konfiguriert ist, um in Kontakt mit einem Anschluss (31, 131) von der Batterie (30, 130) zu kommen; und
einen Verriegelungs-Mechanismus (41, 41a, 42a, 141, 141a, 142a), zum Verriegeln der Batterie (30, 130), so dass der Kontakt zwischen dem Anschluss (31, 131) von der Batterie (30, 130) und dem Anschluss (43, 143) von dem Batterie-Gehäuse (40, 140) aufrechterhalten ist, wenn die Batterie (30, 130) in dem Batterie-Gehäuse (40, 140) platziert ist; **gekennzeichnet durch**
einen Trenn-Mechanismus (44a, 144), der konfiguriert ist, um automatisch den Anschluss (31, 131) von der Batterie (30, 130) und den Anschluss (43, 143) von dem Batterie-Gehäuse (40, 140) zu trennen, wenn der Verriegelungs-Mechanismus (41, 41a, 42a, 141, 141a, 142a) gelöst ist.

## Revendications

1. Vélo à assistance électrique comprenant :
un moteur électrique (22) pour assister une force de pédalage appliquée par un cycliste à des pédales (2) ;
une batterie (30, 130) pour fournir de l'électricité au moteur électrique (22), ladite batterie (30, 130) détachable étant montée sur un cadre de vélo ;
une borne (31, 131) disposée dans la batterie (30, 130) ;
une borne (43, 143) disposée dans le cadre de vélo ; et
un mécanisme de verrou (41, 41a, 42a, 141, 141a, 142a) pour verrouiller la batterie (30, 130) dans un état dans lequel la borne (43, 143) du cadre de vélo et la borne (31, 131) de la batterie (30, 130) sont en contact l'une avec l'autre lorsque la batterie (30, 130) est montée sur le cadre de vélo ; **caractérisé par**
un mécanisme de séparation (44a, 144) configuré pour séparer automatiquement la borne (43, 143) du cadre de vélo et la borne (31, 131) de la batterie (30, 130) lorsque le mécanisme de verrou (41, 41a, 42a, 141, 141a, 142a) est libéré.

2. Vélo à assistance électrique selon la revendication 1, **caractérisé par** un boîtier (40, 140) de batterie (30, 130) dans lequel la batterie (30, 130) peut être insérée dans une première direction,
dans lequel le mécanisme de verrou (41, 41a, 42a, 141, 141a, 142a) inclut un élément de verrou (41, 141) mobile par rapport à la batterie (30, 130), l'élément de verrou (41, 141) étant mobile entre une première position dans laquelle l'élément de verrou (41, 141) restreint un mouvement de la batterie (30, 130) dans une deuxième direction qui est une direction opposée à la première direction et une deuxième position dans laquelle l'élément de verrou (41, 141) est configuré pour permettre le mouvement de la batterie (30, 130), et
la borne (43, 143) du cadre de vélo est disposée dans l'élément de verrou (41, 141).

3. Le vélo à assistance électrique selon la revendication 2, **caractérisé par** la borne (43, 143) du cadre de vélo qui est configurée pour entrer en contact avec la borne (31, 131) de la batterie (30, 130) lorsque l'élément de verrou (41, 141) est dans la première position,
la borne (43, 143) du cadre de vélo qui est configurée pour être éloignée de la borne de la batterie (30, 130) lorsque l'élément de verrou (41, 141) est dans la deuxième position, et
le mécanisme de séparation (44a, 144) qui est configuré pour déplacer l'élément de verrou (41, 141) par rapport à la batterie (30, 130) de la première position à la deuxième position lorsque l'élément de verrou (41, 141) est libéré.

4. Le vélo à assistance électrique selon la revendication 2 ou 3, **caractérisé en ce que** l'élément de verrou (141) est mobile par rapport à la batterie (130) dans une troisième direction qui est une direction coupant la première direction entre la première position et la deuxième position, et
l'élément de verrou (141) est configuré pour entrer en contact avec la batterie (130) lorsque l'élément de verrou (141) est dans la première position.

5. Le vélo à assistance électrique selon la revendication 2 ou 3, **caractérisé en ce que** l'élément de verrou est un capot (41) pour ouvrir et fermer le boîtier de batterie (40).

6. Le vélo à assistance électrique selon l'une quelconque des revendications 2 à 5, **caractérisé en ce que** le mécanisme de séparation (44a, 144) est configuré pour entraîner l'élément de verrou (41, 141) vers la deuxième position.

7. Le vélo à assistance électrique selon l'une quelconque des revendications 1 à 5, **caractérisé en ce que** le mécanisme de séparation inclut un élément élastique (44a, 144) configuré pour appliquer une force de séparation de la borne (43, 143) du cadre de vélo et de la borne (31, 131) de la batterie (30, 130).

8. Boîtier de batterie (40, 140) pour un véhicule incluant un moteur électrique (22) pour assister une force de pédalage appliquée par un cycliste à des pédales (2) par une puissance électronique issue d'une batterie (30, 130), comprenant :
une borne (43, 143) configurée pour entrer en contact avec une borne (31, 131) de la batterie (30, 130) ; et
un mécanisme de verrou (41, 41a, 42a, 141, 141a, 142a) pour verrouiller la batterie (30, 130) de sorte que le contact entre la borne (31, 131) de la batterie (30, 130) et la borne (43, 143) du boîtier de batterie (40, 140) est maintenu lorsque la batterie (30, 130) est placée dans le boîtier de batterie (40, 140) ; **caractérisé par**
un mécanisme de séparation (44a, 144) configuré pour séparer automatiquement la borne (31, 131) de la batterie (30, 130) et la borne (43, 143) du boîtier de batterie (40, 140) lorsque le mécanisme de verrou (41, 41a, 42a, 141, 141a, 142a) est libéré.
